# EUROPÄISCHE PATENTANMELDUNG

(11) **EP 4 610 477 A1**
(43) Veröffentlichungstag der Anmeldung: **03.09.2025**
(21) Anmeldenummer: 25158680.6
(22) Anmeldetag: 18.02.2025
(51) Int. Cl.: F02C 3/22, F02C 3/24, F02C 9/40

(54) **VERFAHREN ZUM BETREIBEN EINES FLUGZEUGS UND FLUGZEUG**

(30) Priorität: 29.02.2024 DE 102024201869
(71) Anmelder: Rolls-Royce Deutschland Ltd & Co KG, 15827 Blankenfelde-Mahlow (DE)
(72) Erfinder: CLEMEN, Carsten, 15827 Blankenfelde-Mahlow (DE); STAUFER, Max, 15827 Blankenfelde-Mahlow (DE)

(57) **Zusammenfassung**

Die Erfindung betrifft ein Verfahren zum Betreiben eines Flugzeugs mit einem gasförmigen Kraftstoff, insbesondere Wasserstoff, und einem Flüssigkraftstoff, insbesondere einem nachhaltigen alternativen Kraftstoff und/oder Kerosin, wobei der gasförmige Kraftstoff und der Flüssigkraftstoff parallel oder alternativ zueinander einer Brennkammer zumindest eines Triebwerks des Flugzeugs zugeführt werden. Ein hinsichtlich Effizienz und Schadstoffausstoß optimiertes Verfahren wird dadurch bereitgestellt, dass das Flugzeug zumindest zeitweise mit einem konstanten Fluss an gasförmigem Kraftstoff betrieben wird, während der Flüssigkraftstofffluss (26) variiert wird (Fig. 1).

## Beschreibung

Die Erfindung betrifft ein Verfahren zum Betreiben eines Flugzeugs mit einem gasförmigen Kraftstoff, insbesondere Wasserstoff, und einem Flüssigkraftstoff, insbesondere einem nachhaltigen alternativen Kraftstoff und/oder Kerosin, wobei der gasförmige Kraftstoff und der Flüssigkraftstoff parallel oder alternativ zueinander einer Brennkammer zumindest eines Triebwerks des Flugzeugs zugeführt werden. Ferner betrifft die Erfindung ein Flugzeug, das zum Betrieb mit einem gasförmigen Kraftstoff und mit einem Flüssigkraftstoff ausgebildet ist, ein Computerprogramm und eine Steuereinrichtung.

Bei bekannten Verfahren der vorstehend genannten Art wird das Flugzeug bei einem Betrieb mit den unterschiedlichen Kraftstoffen (gasförmig und flüssig, "Dual fuel" Betrieb) in der Regel zunächst ausschließlich mit dem gasförmigen und anschließend ausschließlich mit dem flüssigen Kraftstoff betrieben. Dies erfordert ein Brennkammersystem, welches sowohl den gasförmigen als auch den flüssigen Kraftstoff unabhängig voneinander verbrennen kann und dabei alle gesetzlichen Vorschriften hinsichtlich Sicherheit (z. B. Wiederzündung in der Höhe), Emissionen und dergleichen erfüllt. Dies geht in der Regel mit Einbußen in der Systemgüte einher gegenüber einem Brennkammersystem, welches lediglich für den Betrieb mit einer Kraftstoffart ausgelegt und optimiert ist, insbesondere betreffend Effizienz und Emissionen wie Partikel oder Stickoxide (NOₓ).

Der Erfindung liegt die Aufgabe zugrunde, ein Verfahren der eingangs genannten Art bereitzustellen, welches hinsichtlich Effizienz und Schadstoffausstoß optimiert ist, sowie ein entsprechend ausgebildetes Flugzeug, ein Computerprogramm und eine Steuereinrichtung.

Die Aufgabe wird für das Verfahren mit den Merkmalen des Anspruchs 1, für das Flugzeug mit den Merkmalen des Anspruchs 8, für das Computerprogramm mit den Merkmalen des Anspruchs 9 und für die Steuereinrichtung mit den Merkmalen des Anspruchs 10 gelöst.

Bei dem Verfahren ist vorgesehen, dass das Flugzeug zumindest zeitweise mit einem zumindest im Wesentlichen konstanten Fluss an gasförmigem Kraftstoff betrieben wird, während der Flüssigkraftstofffluss variiert wird.

"Zumindest im Wesentlichen" bedeutet beispielsweise mit Abweichungen innerhalb des Kraftstoffflusses um weniger als 5 % von einem Sollwert.

Das Flugzeug ist zur Durchführung des erfindungsgemäßen Verfahrens ausgebildet. Dabei weist es zumindest ein zum zumindest zeitweisen parallelen Betrieb mit dem gasförmigen Kraftstoff und dem Flüssigkraftstoff eingerichtetes Triebwerk auf. Insbesondere sind sämtliche Triebwerke des Flugzeugs entsprechend eingerichtet. Das Triebwerk kann in dem Brennkammersystem Kraftstoffdüsen aufweisen, die sowohl zum Betrieb mit dem gasförmigen Kraftstoff, insbesondere mit Wasserstoff, als auch mit dem Flüssigkraftstoff ausgebildet sind, wobei die Düse/n parallel (zeitgleich) mit den beiden Kraftstoffarten und vorzugsweise zumindest ausschließlich mit Wasserstoff betreibbar ist/sind. Alternativ oder zusätzlich kann das Triebwerk zwei unterschiedliche Arten von Kraftstoffdüsen aufweisen, wobei eine Art ausschließlich mit dem gasförmigen Kraftstoff, insbesondere Wasserstoff, und die andere Art ausschließlich mit dem Flüssigkraftstoff betreibbar ist.

Zugunsten einer einfachen Steuerbarkeit und/oder Regelbarkeit wird das Flugzeug (mit dem zumindest einen Triebwerk) vorzugsweise über mehrere Betriebsphasen hinweg mit dem konstanten Fluss an gasförmigem Kraftstoff betrieben, während der Flüssigkraftstofffluss, insbesondere in Abhängigkeit der Betriebsphase und/oder der erforderlichen Triebwerksleistung, variiert wird.

Vorzugsweise wird das Flugzeug (in einer ersten beispielhaften Betriebsweise) ab einer Betriebsphase Leerlauf, insbesondere unmittelbar, nach einer Betriebsphase Zündung (mit Start des zumindest einen Triebwerks) bis zu einer Betriebsphase Aus (mit einem Abschalten des zumindest einen Triebwerks) am Ende der gesamten Betriebszeit einer Flugmission (einem Betrieb des Flugzeugs von einem Startort bis zu einem Zielort, von Zündung bis Abschalten der Triebwerke) mit dem konstanten Fluss an gasförmigem Kraftstoff betrieben. Alternativ kann das Flugzeug (in einer zweiten beispielhaften Betriebsweise) ab (und einschließlich) einer Betriebsphase Rollen vor einer Betriebsphase Start bis zu einer (und einschließlich der) Betriebsphase Rollen nach einer Betriebsphase Landung einer Flugmission mit dem konstanten Fluss an gasförmigem Kraftstoff betrieben werden. Bei der zweiten Betriebsweise wird das Triebwerk bzw. Flugzeug im Leerlauf mit dem im Leerlauf erforderlichen Fluss an (ausschließlich) gasförmigem Kraftstoff betrieben. Durch den ständigen oder zumindest überwiegenden Parallelbetrieb kann das Brennkammersystem des (insbesondere jeweiligen) Triebwerks wesentlich effizienter und insbesondere hinsichtlich der Emissionen mit einer höheren Güte ausgelegt werden als ein Brennkammersystem, welches mit zwei Kraftstoffen alternativ zueinander betrieben wird.

Vorzugsweise ist vorgesehen, dass der Betrag des konstanten Flusses (Sollwert) an gasförmigem Kraftstoff maximal, z. B. zumindest im Wesentlichen, dem erforderlichen Fluss zum Betreiben des Triebwerks bei Rollen des Flugzeugs (d. h. dem während der "Betriebsphase Rollen" erforderlichen Fluss) und/oder zumindest im Wesentlichen dem Fluss an gasförmigem Kraftstoff zum Betreiben des Triebwerks im Leerlauf ausschließlich mit dem gasförmigen Kraftstoff entspricht. "Zumindest im Wesentlichen" bedeutet z. B. mit einer Abweichung von weniger als 30 %, vorzugsweise weniger als 15 % von dem Kraftstofffluss bei Rollen und/oder im Leerlauf. Auf diese Weise können vorteilhaft Bodenoperationen des Flugzeugs ausschließlich oder mit einem Großteil an gasförmigem Kraftstoff, insbesondere Wasserstoff als Kraftstoff, durchgeführt werden, wodurch die Emissionscharakteristik des Flugzeugs (insbesondere hinsichtlich Partikel-Emissionen und CO₂) am Boden positiv beeinflusst wird.

In einer bevorzugten Ausführungsform des Verfahrens wird das Triebwerk ausschließlich mit dem gasförmigen Kraftstoff gezündet. Dies betrifft neben der Zündung am Boden im regulären Betrieb auch die Wiederzündung in großer Höhe ("altitude relight"). Der Kraftstofffluss an gasförmigem Kraftstoff ist dabei insbesondere geringer als während des Leerlaufs. Der Zündprozess innerhalb des Triebwerks kann so aufgrund der besseren Zündeigenschaften und Brennstabilität von Wasserstoff wesentlich verbessert werden, wobei z. B. auch die Steuerung und/oder Regelung des Zündprozesses deutlich vereinfacht wird. Zudem braucht bei der Zertifizierung bezüglich des Triebwerks lediglich die Zündung mit dem gasförmigen Kraftstoff berücksichtigt zu werden.

Vorzugsweise wird der Flüssigkraftstoff für Betriebsphasen zugeschaltet, in welchen die Leistung des Triebwerks die Leistung in der Betriebsphase Leerlauf und/oder in der Betriebsphase Rollen übersteigt, wobei das Triebwerk parallel mit dem (konstanten Fluss an) gasförmigen Kraftstoff, insbesondere Wasserstoff, und dem Flüssigkraftstoff betrieben wird. Dies betrifft insbesondere die Betriebsphasen Start, Reiseflug und/oder Landung und ggf. die Betriebsphasen Rollen im Falle der ersten beispielhaften Betriebsweise. Der Flüssigkraftstofffluss wird insbesondere eingestellt bzw. variiert unter Berücksichtigung des konstanten Wasserstoffflusses. So kann vorteilhaft in der Höhe Wasserstoff im Gegensatz zu dem Flüssigkraftstoff nur in vergleichsweise geringem Maße verbrannt werden. Auf diese Weise wird der Ausstoß an Wasser und Stickoxiden (NOₓ) im Höhenbetrieb gegenüber dem Betrieb mit reinem Wasserstoff deutlich reduziert. Beide Spezies haben in der Höhe eine wesentlich höhere Klimawirksamkeit (im Sinne von Treibhausgasen) als Kohlenstoffdioxid (CO₂).

Vorzugsweise wird der gasförmige Kraftstoff gasförmig oder flüssig gelagert und/oder bereitgestellt, wobei der gasförmige Kraftstoff bei flüssiger Lagerung und/oder Bereitstellung vor Zufuhr in die Brennkammer verdampft wird. Zu diesem Zweck weist das Flugzeug zumindest eine entsprechend ausgebildete Tankvorrichtung und Kraftstoffperipherie zur Versorgung des (insbesondere jeweiligen) Brennkammersystems des (insbesondere jeweiligen) Triebwerks auf.

Das erfindungsgemäße Flugzeug ist zum Betrieb mit einem gasförmigen Kraftstoff und mit einem Flüssigkraftstoff ausgebildet, die zumindest zeitweise parallel zumindest einem Triebwerk (vorzugsweise allen Triebwerken parallel) des Flugzeugs zugeführt werden, und umfasst eine Steuereinrichtung, die zum Betreiben des Flugzeugs gemäß einem erfindungsgemäßen Verfahren eingerichtet ist.

Das Computerprogramm umfasst Befehle, die bewirken, dass das erfindungsgemäße Flugzeug mit einem erfindungsgemäßen Verfahren betrieben wird.

Zudem weist das Flugzeug eine Steuereinrichtung auf, auf der dieses Computerprogramm gespeichert ist.

Nachfolgend wird die Erfindung anhand von Ausführungsbeispielen unter Bezugnahme auf die Zeichnungen näher erläutert. Es zeigen:
- Fig. 1: ein Diagramm mit einem Kraftstofffluss pro Zeit über einer Zeit für eine gesamte Betriebszeit eines Flugzeugs in einer beispielhaften Flugmission in einem Parallelbetrieb,
- Fig. 2: ein Diagramm mit einer vergrößerten Darstellung des Diagramms gemäß Fig. 1, mit einem ersten Teil der Flugmission, und
- Fig. 3: ein Diagramm mit einer vergrößerten Darstellung des Diagramms gemäß Fig. 1, mit einem zweiten Teil der Flugmission.

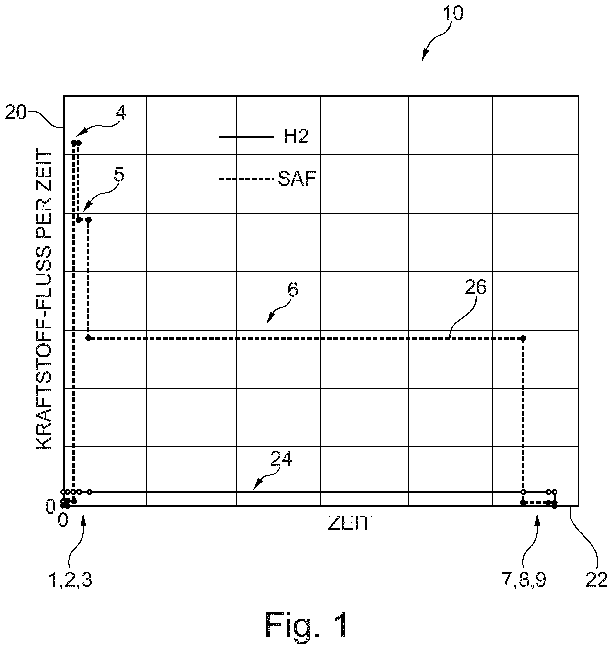

Fig. 1 zeigt ein Diagramm 10 mit einem Kraftstofffluss (als Massenstrom) pro Zeit 20 über einer Zeit 22 für eine gesamte Betriebszeit einer beispielhaften Flugmission eines Flugzeugs, welches mit einem erfindungsgemäßen Verfahren gemäß einer beispielhaften ersten Betriebsweise betrieben wird. Auf der Flugmission wird das Flugzeug mit gasförmigem Kraftstoff, insbesondere Wasserstoff (H₂), und einem Flüssigkraftstoff, insbesondere Kerosin oder einem nachhaltigen alternativen Kraftstoff (Sustainable Alternative Fuel, SAF) betrieben. In dem Diagramm 10 ist der Betrieb mit Wasserstoff anhand eines Wasserstoffstroms 24 mittels einer durchgezogenen Linie veranschaulicht und der Betrieb mit dem Flüssigkraftstoff anhand eines Flüssigkraftstoffstroms 26 mittels einer gestrichelten Linie veranschaulicht.

In Fig. 1 ist die gesamte Flugmission dargestellt, mit unterschiedlichen Betriebsphasen entsprechend im Wesentlichen den Flugphasen des Flugzeugs. Die Betriebsphasen umfassen aufeinanderfolgend eine Betriebsphase Zündung 1, eine Betriebsphase Leerlauf 2, eine Betriebsphase Rollen 3, eine Betriebsphase Start 4, eine Betriebsphase Steigflug 5, eine Betriebsphase Reiseflug 6, eine Betriebsphase Landung 7, eine Betriebsphase Rollen 8 und eine Betriebsphase Aus 9.

Die Betriebsphase Zündung 1 entspricht einer vergleichsweise kurzen Betriebsphase, innerhalb der ein Triebwerk des Flugzeugs, vorzugsweise mehrere Triebwerke, gezündet wird/werden. In der Betriebsphase Start 4 wird zur Entwicklung des Startschubs die maximale Leistung des Triebwerks abgerufen ("maximum power take-off", MTO). Innerhalb der Betriebsphase Aus 9 wird das Triebwerk abgeschaltet.

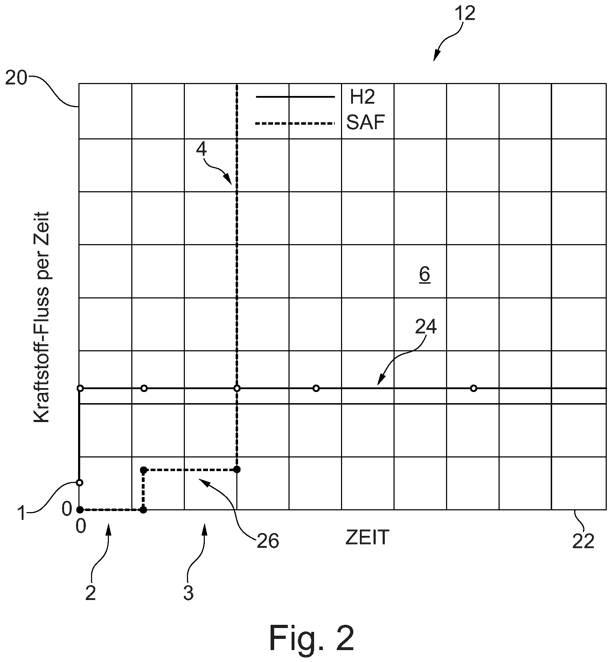

Fig. 2 zeigt in einem Diagramm 12 eine vergrößerte Darstellung von Fig. 1 mit einem ersten Teil der Flugmission, umfassend die Betriebsphasen Zündung 1, Leerlauf 2 und Rollen 3 vor der Betriebsphase Start 4.

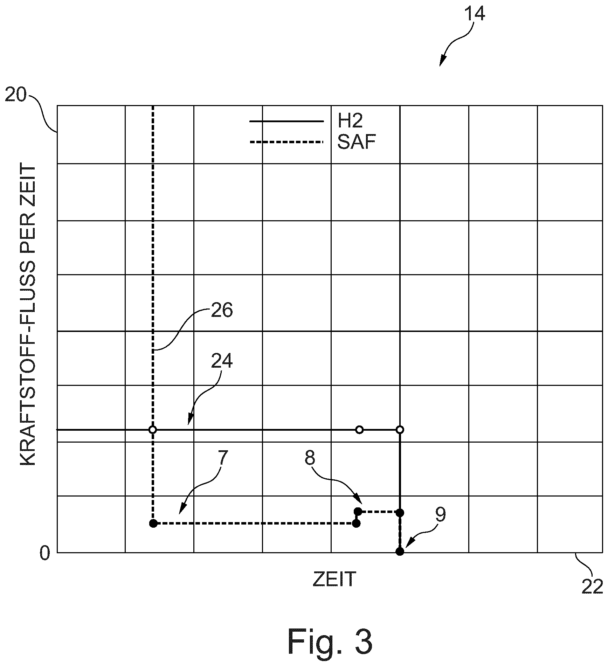

Fig. 3 zeigt in einem Diagramm 14 eine vergrößerte Darstellung von Fig. 1 mit einem zweiten Teil der Flugmission, umfassend die Betriebsphasen Landung 7, Rollen 8, und Aus 9.

Die Reichweite der Flugmission beträgt z. B. 6000 km bei einer Reisegeschwindigkeit von 800 km/h.

Bei einem aus dem Stand der Technik bekannten Betrieb mit sowohl gasförmigem Kraftstoff als auch Flüssigkraftstoff ("Dual fuel" Betrieb) wird das zumindest eine Triebwerk innerhalb des ersten Teils des Fluges ausschließlich mit Wasserstoff und innerhalb des zweiten (i. d. R. längeren) Teils des Fluges ausschließlich mit dem Flüssigkraftstoff betrieben. Bei der beispielhaften Flugmission wird das Flugzeug während des ersten Teils, z. B. die ersten 1200 km einschließlich der Bodenoperationen am Startort, mit den ersten Betriebsphasen Zündung 1, Leerlauf 2, Rollen 3, Start 4, Steigflug 5 und dem ersten Teil des Reiseflugs 6, ausschließlich mit Wasserstoff betrieben. Anschließend wird der zweite Teil, mit den verbleibenden 4800 km einschließlich der Bodenoperationen am Landeort, innerhalb der Betriebsphasen Reiseflug 6, Landung 7 und Rollen 8 bis zur Betriebsphase Aus 9 ausschließlich mit dem Flüssigkraftstoff betrieben (vgl. auch Tabelle).

Eine Übersicht der Betriebsphasen mit den verwendeten Kraftstoffen während der vorstehend beispielhaft angegebenen Flugmission gemäß dem Stand der Technik, mit Umschalten, und gemäß dem erfindungsgemäßen Verfahren, mit Parallelbetrieb gemäß der ersten und einer zweiten beispielhaften Betriebsweise, ist in nachfolgender Tabelle zusammengefasst:

| Betriebsphase | Kraftstoff, Betrieb mit Umschaltung (StdT) | Kraftstoff im erfindungsgemäßen Parallelbetrieb (erste ODER zweite Betriebsweise) |
|---|---|---|
| Zündung 1 | Zünd-H2 | Zünd-H2 |
| Leerlauf 2 | H2 für Leerlauf | H2 für Leerlauf (Leerlauf-H2) |
| Rollen 3 | H2 für Rollen | (Leerlauf-H2 + SAF) für Rollen ODER H2 für Rollen |
| Start 4 | H2 für Start | ((Leerlauf-H2 + SAF) ODER (H2 für Rollen + SAF)) für Start |
| Steigflug 5 | H2 für Steigflug | ((Leerlauf-H2 + SAF) ODER (H2 für Rollen + SAF)) für Steigflug |
| Reiseflug 6 | H2 für Reiseflug | ((Leerlauf-H2 + SAF) ODER (H2 für Rollen + SAF)) für Reiseflug |
| Reiseflug 6 | SAF für Reiseflug | ((Leerlauf-H2 + SAF) ODER (H2 für Rollen + SAF)) für Reiseflug |
| Landung 7 | SAF für Landung | ((Leerlauf-H2 + SAF) ODER (H2 für Rollen + SAF)) für Landung |
| Rollen 8 | SAF für Rollen | ((Leerlauf-H2 + SAF) ODER (H2 für Rollen + SAF)) für Rollen |
| Aus 9 | - | - |

Im Gegensatz zu dem angegebenen bekannten Flugbetrieb wird das Flugzeug bei dem erfindungsgemäßen Verfahren vorzugsweise über im Wesentlichen die gesamte Betriebszeit, oder zumindest im Wesentlichen im Bodenbetrieb, mit einem konstanten Fluss an gasförmigem Kraftstoff, hier dem Wasserstofffluss 24, betrieben.

Der konstante Wasserstofffluss 24 entspricht in der ersten Betriebsweise, z. B. abgesehen von der Betriebsphase Zündung 1, betragsmäßig insbesondere dem Wasserstofffluss zum Betreiben des Triebwerks (oder der Triebwerke) im Leerlauf ausschließlich mit Wasserstoff. In der zweiten, in Fig. 1 nicht dargestellten, beispielhaften Betriebsweise (s. auch Tabelle) entspricht der konstante Wasserstofffluss ab der Betriebsphase Rollen 3 vor der Betriebsphase Start 4 bis zu der Betriebsphase Rollen 8 nach der Betriebsphase Landung 7 dem für die Betriebsphasen Rollen 3, 8 erforderlichen konstanten Wasserstofffluss. Auf diese Weise können vorteilhaft Bodenoperationen des Flugzeugs ausschließlich oder mit einem Großteil an Wasserstoff als Kraftstoff durchgeführt werden, wodurch die Emissionscharakteristik des Flugzeugs (insbesondere hinsichtlich Partikel-Emissionen und CO₂) am Boden positiv beeinflusst wird.

Parallel (zeitgleich) zu dem konstanten Wasserstofffluss 24 wird bei höheren Triebwerksleistungen als bei der Betriebsphase Leerlauf 2 der Flüssigkraftstofffluss 26 zugeschaltet und bei Änderung der erforderlichen Triebwerksleistung variiert, insbesondere in Abhängigkeit der Betriebsphasen, wie in Fig. 1, Fig. 2 und Fig. 3 beispielhaft gezeigt.

Auf diese Weise wird vorteilhaft in der Höhe Wasserstoff im Gegensatz zu dem Flüssigkraftstoff nur in vergleichsweise geringem Maße verbrannt. So wird der Ausstoß an Wasser und Stickoxiden (NOₓ) im Höhenbetrieb gegenüber dem Betrieb mit reinem Wasserstoff deutlich reduziert. Beide Spezies haben in der Höhe eine wesentlich höhere Klimawirksamkeit (im Sinne von Treibhausgasen) als Kohlenstoffdioxid (CO₂).

Für eine vergleichbare Flugmission wird bei einem Betrieb gemäß dem Stand der Technik und gemäß dem erfindungsgemäßen Verfahren ("Parallelbetrieb") die gleiche Menge an gasförmigem Kraftstoff und Flüssigkraftstoff benötigt.

Bei dem erfindungsgemäßen Verfahren wird vorzugsweise in der Betriebsphase Zündung 1 das Triebwerk mit Wasserstoff gestartet, wobei die Brennkammer des (insbesondere jeweiligen) Triebwerks insbesondere ausschließlich mit Wasserstoff gezündet wird. Anschließend wird dem Triebwerk innerhalb der Betriebsphase Leerlauf 2 ausschließlich der Wasserstofffluss 24 zugeführt, d. h. das Triebwerk wird ausschließlich mit Wasserstoff betrieben. Zu Beginn der Betriebsphase Rollen 3 wird der Wasserstofffluss 24 weiterhin konstant gehalten und der Flüssigkraftstofffluss 26 zugeschaltet. Der Flüssigkraftstofffluss 26 wird über die weitere Betriebszeit zur Erreichung der folgenden Betriebsphasen des Flugzeugs, wie der Betriebsphase Start 4, mit der maximalen Triebwerksleistung für den Startschub, Steigflug 5, Reiseflug 6 etc. eingestellt bzw. variiert unter Berücksichtigung des konstanten Wasserstoffflusses 24.

Vorzugsweise wird jegliche Zündung des Triebwerks mit Wasserstoff durchgeführt, was neben der dargestellten Betriebsphase Zündung 1 auch eine gegebenenfalls erforderliche Wiederzündung des Triebwerks in der Höhe betreffen kann (hier nicht gezeigt). Auf diese Weise kann der Zündprozess innerhalb des Triebwerks aufgrund der besseren Zündeigenschaften und Brennstabilität von Wasserstoff wesentlich verbessert werden. Auch die Steuerung und/oder Regelung des Zündprozesses wird wesentlich vereinfacht.

Der gasförmige Kraftstoff, insbesondere Wasserstoff, kann gasförmig oder flüssig innerhalb des Flugzeugs gelagert und/oder bereitgestellt werden. Bei Lagerung und/oder Bereitstellung des Wasserstoffes in flüssiger Form wird selbiger vorzugsweise vor Zufuhr in die Brennkammer verdampft. Die in einer geeigneten Tankvorrichtung (hier nicht gezeigt) gelagerte Menge ist derart auf die entsprechende Flugmission abgestimmt, dass das Flugzeug über zumindest im Wesentlichen die gesamte Betriebszeit mit dem konstanten Wasserstofffluss 24 betrieben werden kann. Aus Sicherheitsgründen mitgeführter zusätzlicher Kraftstoff wird z. B. zumindest überwiegend durch den Flüssigkraftstoff gebildet.

Zudem weist das Flugzeug eine Steuereinrichtung, insbesondere ein Fluggerät, auf, welches zum erfindungsgemäßen Betreiben des Flugzeugs konfiguriert ist. Insbesondere ist auf der Steuereinrichtung ein Computerprogramm umfassend Befehle gespeichert, die bewirken, dass das Flugzeug mit dem erfindungsgemäßen Verfahren betrieben wird.

Durch den (nahezu) ständigen oder überwiegenden Kombinations- bzw. Parallelbetrieb (z. B. ausgenommen der Betriebsphasen Zündung 1 und Leerlauf 2, sowie ggf. Rollen 3, 8) kann das Brennkammersystem des Triebwerks wesentlich effizienter und bedarfsgerechter ausgelegt werden und bedarf nur der Zertifizierung für diese Betriebsart. Emissionen können in Summe effektiv gesenkt werden.

### Bezugszeichenliste

- 1: Betriebsphase Zündung
- 2: Betriebsphase Leerlauf
- 3: Betriebsphase Rollen
- 4: Betriebsphase Start
- 5: Betriebsphase Steigflug
- 6: Betriebsphase Reiseflug
- 7: Betriebsphase Landung
- 8: Betriebsphase Rollen
- 9: Betriebsphase Aus
- 10: Diagramm
- 12: Diagramm
- 14: Diagramm
- 20: Kraftstofffluss pro Zeit
- 22: Zeit
- 24: Wasserstoffstrom
- 26: Flüssigkraftstoffstrom

## Patentansprüche

1. Verfahren zum Betreiben eines Flugzeugs mit einem gasförmigen Kraftstoff, insbesondere Wasserstoff, und einem Flüssigkraftstoff, insbesondere einem nachhaltigen alternativen Kraftstoff und/oder Kerosin, wobei der gasförmige Kraftstoff und der Flüssigkraftstoff parallel oder alternativ zueinander einer Brennkammer zumindest eines Triebwerks des Flugzeugs zugeführt werden, wobei das Flugzeug zumindest zeitweise mit einem konstanten Fluss an gasförmigem Kraftstoff betrieben wird, während der Flüssigkraftstofffluss (26) variiert wird,
**dadurch gekennzeichnet,**
**dass** das Flugzeug über mehrere Betriebsphasen hinweg mit dem konstanten Fluss an gasförmigem Kraftstoff betrieben wird, während der Flüssigkraftstofffluss (26), insbesondere in Abhängigkeit der Betriebsphase und/oder einer erforderlichen Triebwerksleistung, variiert wird, und
das Flugzeug
ab einer Betriebsphase Rollen (3) vor einer Betriebsphase Start (4) bis zu einer Betriebsphase Rollen (8) nach einer Betriebsphase Landung (7) mit dem konstanten Fluss an gasförmigem Kraftstoff betrieben wird.

2. Verfahren nach Anspruch 1,
**dadurch gekennzeichnet,**
**dass** das das Flugzeug ab einer Betriebsphase Leerlauf (2), insbesondere unmittelbar, nach einer Betriebsphase Zündung (1) bis zu einer Betriebsphase Aus (9) am Ende der gesamten Betriebszeit einer Flugmission mit dem konstanten Fluss an gasförmigem Kraftstoff betrieben wird.

3. Verfahren nach einem der vorhergehenden Ansprüche,
**dadurch gekennzeichnet,**
**dass** der Betrag des konstanten Flusses an gasförmigem Kraftstoff maximal, z. B. zumindest im Wesentlichen, dem erforderlichen Fluss an gasförmigem Kraftstoff zum Betreiben des Triebwerks bei Rollen des Flugzeugs und/oder
zumindest im Wesentlichen dem Fluss an gasförmigem Kraftstoff zum Betreiben des Triebwerks im Leerlauf
ausschließlich mit dem gasförmigen Kraftstoff entspricht.

4. Verfahren nach einem der vorhergehenden Ansprüche,
**dadurch gekennzeichnet,**
**dass** das Triebwerk ausschließlich mit dem gasförmigen Kraftstoff gezündet wird.

5. Verfahren nach einem der vorhergehenden Ansprüche,
**dadurch gekennzeichnet,**
**dass** der Flüssigkraftstoff für Betriebsphasen zugeschaltet wird, in welchen die Leistung des Triebwerks die Leistung in der Betriebsphase Leerlauf (2) und/oder in der Betriebsphase Rollen (3) übersteigt, wobei das Triebwerk parallel mit dem gasförmigen Kraftstoff und dem Flüssigkraftstoff betrieben wird.

6. Verfahren nach einem der vorhergehenden Ansprüche,
**dadurch gekennzeichnet,**
**dass** der gasförmige Kraftstoff gasförmig oder flüssig gelagert und/oder bereitgestellt wird, wobei der gasförmige Kraftstoff bei flüssiger Lagerung und/oder Bereitstellung vor Zufuhr in die Brennkammer verdampft wird.

7. Flugzeug, das zum Betrieb mit einem gasförmigen Kraftstoff und mit einem Flüssigkraftstoff ausgebildet ist, die zumindest zeitweise parallel zumindest einem Triebwerk des Flugzeugs zugeführt werden, mit einer Steuereinrichtung, die zum Betreiben des Flugzeugs gemäß einem Verfahren nach einem der vorhergehenden Ansprüche eingerichtet ist.

8. Computerprogramm umfassend Befehle, die bewirken, dass das Flugzeug nach Anspruch 7 mit einem Verfahren nach einem der Ansprüche 1 bis 6 betrieben wird.

9. Steuereinrichtung, auf der das Computerprogramm nach Anspruch 8 gespeichert ist.
